(19) Europäisches Patentamt
European Patent Office
Office européen des brevets

(11) EP 2 939 354 B1

(12) EUROPEAN PATENT SPECIFICATION

(45) Date of publication and mention of the grant of the patent:
**13.03.2019 Bulletin 2019/11**

(21) Application number: **13868484.0**

(22) Date of filing: **23.12.2013**

(51) Int Cl.:
***H04J 3/16*** *(2006.01)* ***H04B 10/25*** *(2013.01)*
***H04B 10/27*** *(2013.01)* ***H04B 10/516*** *(2013.01)*
*H04L 5/00* *(2006.01)*

(86) International application number:
**PCT/US2013/077494**

(87) International publication number:
**WO 2014/105830 (03.07.2014 Gazette 2014/27)**

# (54) ADAPTIVE DATA TRANSMISSION FORMAT FOR OPTICAL TRANSPORT NETWORK

ADAPTIVES DATENÜBERTRAGUNGSFORMAT FÜR EIN OPTISCHES TRANSPORTNETZWERK

FORMAT DE TRANSMISSION DE DONNÉES ADAPTATIF POUR RÉSEAU DE TRANSPORT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2012 US 201261747830 P**

(43) Date of publication of application:
**04.11.2015 Bulletin 2015/45**

(73) Proprietor: **ZTE (USA) INC.**
**Richardson, TX 75080 (US)**

(72) Inventor: **HUO, David**
**Newton, NJ 07860 (US)**

(74) Representative: **J A Kemp**
**14 South Square**
**Gray's Inn**
**London WC1R 5JJ (GB)**

(56) References cited:
**EP-A1- 2 523 416**
**WO-A1-2012/104683**
**JP-A- 2011 146 917**
**US-A1- 2004 105 456**
**US-A1- 2012 082 455**
**US-A1- 2012 189 304**

- **MASAHIKO JINNO ET AL: "Elastic and adaptive optical networks: possible adoption scenarios and future standardization aspects", IEEE COMMUNICATIONS MAGAZINE, IEEE SERVICE CENTER, PISCATAWAY, US, vol. 49, no. 10, 1 October 2011 (2011-10-01), pages 164-172, XP011385330, ISSN: 0163-6804, DOI: 10.1109/MCOM.2011.6035831**
- **KOZICKI B ET AL: "Efficient elastic optical path network for transmission beyond 100G", OPTICAL METRO NETWORKS AND SHORT-HAUL SYSTEMS III, SPIE, 1000 20TH ST. BELLINGHAM WA 98225-6705 USA, vol. 7959, no. 1, 22 January 2011 (2011-01-22), pages 1-9, XP060010921, DOI: 10.1117/12.879847**
- **JINNO M ET AL: "Spectrum-efficient and scalable elastic optical path network: architecture, benefits, and enabling technologies", IEEE COMMUNICATIONS MAGAZINE, IEEE SERVICE CENTER, PISCATAWAY, US, vol. 47, no. 11, 1 November 2009 (2009-11-01), pages 66-73, XP011284156, ISSN: 0163-6804, DOI: 10.1109/MCOM.2009.5307468**
- **TAKUYA OHARA: "Standardization issues and solutions toward flexible/elastic optical networks", OPTO-ELECTRONICS AND COMMUNICATIONS CONFERENCE (OECC), 2012 17TH, IEEE, 2 July 2012 (2012-07-02), pages 115-116, XP032222957, DOI: 10.1109/OECC.2012.6276398 ISBN: 978-1-4673-0976-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 939 354 B1

## Description

### FIELD OF THE INVENTION

The present invention relates to a method of enabling elastic optical network operation, particularly with an adaptive data transmission format.

### BACKGROUND

1. Introduction

A. Capability of the Coherent Detection

The technology of coherent detection enabled by digital data processing has ushered a new era in the fiber optical transport and it promises increase of the transmission speed to 100G/s and beyond for standard single mode fiber (SSMF) without dispersion compensation. This possibility gives hope to many incumbent operators to upgrade, or to extend, the capability of their network without huge additional investment in the fiber infrastructure. The currently prevailed commercial implementation of such systems makes use of advancement in three basic techniques: baud rate, modulation order, and optical sub-carriers. Increasing baud rate requires high speed ADC/DAC, increasing modulation order requires advanced system design and detection algorithms, and increasing sub-carriers per bandwidth requires advanced laser technology and optical filters. For all these techniques to work together to enable the expected high spectrum efficiency, a detection algorithm driven by powerful DSP is necessary. This poses new challenges to the network design and protocol design, when the physical transceiver nowadays becomes more and more software enabled or even defined, taking advantage of the high performance IC fabrication process and advanced ASIC.

Important features of the new coherent detection technology brought about not only the high transmission rate and high spectrum efficiency (SE), but also the flexibility of using the optical spectrum that was not possible before, and, as such, it provides new paradigm of network planning and network performance. For instance, the complex modulation, that replaces the traditional on-off modulation, allows for changing the modulation order to provide different spectrum efficiency. For fixed bandwidth, this means the ability to adapt the spectrum efficiency to the transmission distance. On the other hand, the channels enabled by multiple sub-carriers introduce the possibility to increase the spectrum efficiency without linearly increasing necessary bandwidth, making it attractive to introduce flexible spectrum grids in the standard. This is the idea of the so-called elastic optical network (EON). Offered with all these possibilities, the operators will be planning and operating the optical transport network (OTN) in a totally different way than it is today, i.e. in a way that is more flexible in using the network resource and more adaptive to the traffic needs, while maximizing the utilization of the fiber optical infrastructure.

B. From OTN to EON

An elastic optical network (EON) is one that is capable of using the fiber optical spectrum in such a flexible way that much higher volume of traffic can be handled in the same optical fiber infrastructure as before. The goal is to increase the network capacity by increasing spectrum efficiency. From feasibility point of view, we have to accept the fact that, within the framework of optical transport network (OTN) [2, 3, 4], the spectrum must be handled with a meaningful finite granularity, i.e., slot, so that any resource management scheme can work with the spectrum slot-wise, even within an EON. Under this constraint, the optical spectrum efficiency can be subdivided into two components: One is the spectrum efficiency of a single channel that is based on the capability of the transceiver, switch and other network elements. The other is the spectrum utilization that is based on the spectrum management over all channels. Therefore, two contradictions in this context become quintessential in an effective deployment of EON: The trade-off between the spectrum efficiency and allocation flexibility, as well as the trade-off between the provisioned capacity and the transmission distance. Being able to manage the spectrum with respect to these trade-offs will ultimately leads to a better overall spectrum utilization, provided that the following lower layer techniques can be introduced in the framework of optical transport network architecture:

- A physical channel can be defined on different constellation of optical carriers with regard to its physical location on the spectrum and bandwidth size. Starting from a fixed minimal bandwidth, call it an elementary carrier, one can construct larger carriers as a multiple of the elementary carriers. The multiple elementary carriers constitute the larger carrier can be contiguous or non-contiguous. Thus, continuing on this path, many different types of carrier can be defined: single carrier, compound carrier, contiguous carriers, non-contiguous carriers, etc. An elementary physical channel can be defined by a specific data rate on the elementary carrier, say 100Gbits/s per 50GHz to align with the current DWDM grid.

- High spectrum efficiency per channel can be achieved in optical layer using optical sub-carriers through techniques like CO-OFDM or Nyquist WDM or other implementations [1, 7]. Such an optical channel may occupy a larger bandwidth than that a single elementary channel would need, but the occupied bandwidth is much smaller than that when the same transmission rate is provided by a multiple of simultaneous elementary channels [5]. Different spectrum efficiencies per channel can also be provided by different modulation orders, say QPSK, 16QAM, 64QAM, etc. With different modulation order, different spectrum efficiency can be achieved with the same bandwidth, adequate for different transmission distance. This offers an alternative to channels that are based on optical sub-carriers. Therefore, in order to benefit from the possibility of different spectrum efficiencies, it is necessary to define different channel types to allow for adaptation to the traffic demand: Different traffic requires different channel types.

- Moreover, it should be possible to construct ODU/OTU that is aware of the spectrum efficiency. ODUs of the same size but of different flavors can be defined to account for different channel types. Thus, different ODU flavors can be chosen to adapt to the required necessary spectrum efficiency and transmission distance.

- Benefiting from the physical layer awareness, an ODU can be protected by an FEC mechanism that is adaptive to the traffic and to the underlying channel type. Thus, an ODU of fixed size can be supported by different channel types as well as by different FEC mechanisms. This adds more flavors to the ODU. By introducing types and flavors for the ODU/OUT one obtains a much richer pool of available traffic bearers in the frame level and eventually improves the efficiency of spectrum usage.

The OTN architecture is by and large based on the on-off technology and, as such, assumed a rather simple physical layer. At the time it was believed that digital processing took place more likely at L2 and above. As a result, the possibilities and flexibilities offered by the new coherent detection technology come into conflict with the current strict layered architecture. As more and more software are involved in the coherent detection technology, an interaction between the upper layer frames and the lower layer multiplexing, including the transmission/reception, is needed to take full advantage of the new technology. Amending the OTN architecture to allow for cross layer information transfer is essential to release the full potential of EON.

C. Amendment to the OTN Architecture

The current OTN architecture is by and large based on the on-off technology and upper layer based, because at the time it was believed that digital processing only took place at L2 and above. Therefore, it does not take into account the possibilities and flexibilities offered by the new coherent detection technology at L1 and below. Thus, the current strict layered architecture of OTN does not allow direct interaction between the upper layer data frames and the multiplexing layer involving the transmitter and receiver, thus making an elastic operation as envisioned above difficult. Hence, it is necessary to amend the OTN architecture to allow for cross layer information transfer from the bottom WDM module to the framing of ODUs and reversely.

Masahiko Jinno et al: "Elastic and Adaptive Optical Networks: Possible Adoption Scenarios and Future Standardization Aspects", IEEE Communications Magazine, October 2011, pages 164-172 discloses possible adoption scenarios from rigid optical networks to elastic and adaptive optical networks. Similar aspects are also disclosed in "Efficient elastic optical path network for transmission beyond 100G", by B. Kozicki et al, OPTICAL METRO NETWORKS AND SHORT-HAUL SYSTEMS III, SPIE, 1000 20TH ST. BELLINGHAM WA 98225-6705 USA, vol. 7959, no. 1, 22 January 2011 (2011-01-22), pages 1-9, DOI: 10.1117/12.879847, "Spectrum-efficient and scalable elastic optical path network: architecture, benefits, and enabling technologies", by M. Jinno et al., IEEE COMMUNICATIONS MAGAZINE, IEEE SERVICE CENTER, PISCATAWAY, US, vol. 47, no. 11, 1 November 2009 (2009-11-01), pages 66-73, ISSN: 0163-6804, DOI: 10.1109/MCOM.2009.5307468 and "Standardization issues and solutions toward flexible/ elastic optical networks", by Takuya Ohara, OPTO-ELECTRONICS AND COMMUNICATIONS CONFERENCE (OECC), 2012 17TH, IEEE, 2 July 2012 (2012-07-02), pages 115-116, DOI: 10.1109/ OECC.2012.6276398ISBN: 978-1-4673-0976-9.

The invention is defined by the appended claims. Embodiments not fully falling within the scope of the appended claims are to be understood merely as examples useful for understanding the invention.

## BRIEF DESCRIPTION OF THE DRAWINGS

Having thus described the invention in general terms, reference is now made to the accompanying drawings, which are not necessarily drawn to scale. The accompanying drawings are included to provide a further understanding of the invention, and are incorporated in and constitute a part of this specification. The drawings illustrate disclosed embodiments and/or aspects and, together with the description, serve to explain the principles of the invention, the scope of which is determined by the claims.

In the drawings:

Fig.1 shows client server associations in an optical transport network.
Fig. 2, Illustrating example of the layers from ODU k to OTMn.m.
Fig. 3, An example of mapping of ODUS to the optical carriers as proposed by 2012 to SG15.
Fig. 4, Illustration of a channel carrier constellation on optical spectrum.2
Fig. 5, Flexible data unit format in different types (left) and flavors (right).
Fig. 6, Equivalence between spectrum efficiency and transmission distance: DU = a generic data frame with fixed bits.
Fig. 7, The difference between the lines lies in the first derivation of the line (slope), where the red line corresponds to the multiple parallel spectrum slot when the guard band is ignored. This poses the lowest single channel spectrum efficiency. The green line demonstrates the option that for a given SE different bandwidth corresponds to different transmission distance and can be selected as such; there is a mapping between slopes and capable distance.

## DETAILED DESCRIPTION OF THE INVENTION

The present inventions now will be described more fully hereinafter with reference to the accompanying drawings, in which some examples of the embodiments of the inventions are shown. It is to be understood that the figures and descriptions provided herein may have been simplified to illustrate elements that are relevant for a clear understanding of the present invention, while eliminating, for the purpose of clarity, other elements found in typical adaptive data transmission system and methods. Those of ordinary skill in the art may recognize that other elements and/or steps may be desirable and/or necessary to implement the devices, systems, and methods described herein. However, because such elements and steps are well known in the art, and because they do not facilitate a better understanding of the present invention, a discussion of such elements and steps may not be provided herein. The present disclosure is deemed to inherently include all such elements, variations, and modifications to the disclosed elements and methods that would be known to those of ordinary skill in the pertinent art. Indeed, these disclosure inventions may be embodied in many different forms and should not be construed as limited to the embodiments set forth therein; rather, these embodiments are provided by way of example so that this disclosure will satisfy applicable legal requirements. Like numbers refer to like elements throughout.

As an alternative to standard, the flexibilities introduced by the new transmission can be implemented as proprietary solution and declared as service clients of OCh within the OTN architecture. However, without the ability to cross the domains of different implementations, the new spectrum efficiency and related capacity will be severely limited and compromised, unless a standardized approach is taken. Even within the scope of proprietary solutions there is a need to transfer common acknowledged information across the border of domains, as necessitated by LSA. Thus, it seems beneficial to introduce architecture amendment to leverage the opportunities provided by the coherent detection technology.

In the following we start to split the problem into specific questions, thus guiding ourselves to address the architectural issuess raised above.

2. Current Status of SG15: Dynamic Allocation of 50GHz Slots under Discussion

Staying with the current architecture, we made the two proposals to SG15 by 2012 to introduce the inverse-multiplexing scheme to allow flexible utilization of the optical spectrum within the DWDM grids (50GHz). The status is well summarized as following:

*The "layers" in the media network need not be considered - the media is essentially flat and has no hierarchy (the OMS and OTS are useful as maintenance entities). Also the media is independent of the structure of the digital signal.*

*One pragmatic approach to the definition of the OTUS frame is to use n*100Gb/s frames. If we take this approach then we can map the n*100Gb/s frames into k optical signals that carry m*100Gb/s frames. We would then have one optical signal per media channel. This gives us the flexibility to have, for example k=1 and m=10 so we have a single optical signal carrying a 1T bit stream; or k=10 m=1 where we would have 10 optical signals (each with FEC and framing) each carrying 100G that would be reassembled by the receiver, or any other suitable combination.*

*This approach to the definition of a modular frame would decouple the digital format from the optical signal and we could optimize the optics based on the application. It would also offer the flexibility to allow us to take advantage of advances in optical technology or DSP that allow higher bit rates and spectral density. Initially it would allow us to*

*reuse of existing amplifier chains with the 50GHz fixed grid; or optimize for new flex grid applications. In the case of the flex grid we could optimize the bit rate per optical signal, the media channel (spectral allocation) and the guard band between the media channels.*

*If we decide to support the multi-media channel approach then, based on our knowledge of the applications, we should make a proposal on the amount of differential delay that should be accommodated. This would allow us to express our view of the trade-off between routing flexibility and buffer size.*

It is worth noting that this approach does not change the spectral efficiency of a single channel (100Gb/50GHz=2), although it improves the utilization of the entire spectrum band by using fragmented spectra. As such it will solve only part of the entire problem of spectrum efficiency and can be seen as the first step of a rather larger project.

As this is the first step towards a long term evolution, we need to verify the impact of the proposals in terms of the forward compatibility. To this end, a rather bigger picture on what is possible within the framework of OTN is necessary.

3. Open Questions

Which of the intermediate layers are to be modified in order to support the ODUS of large payload based on contiguous, or discrete, optical spectra, with the given performance target?

Or, the other way round, knowing what we can, or want to, change in the architecture, what performance value can we achieve with the introduced ODUS?

The question is typical where every system design starts. The components that can play a role in this design, is illustrated by Figure 6-6 in G.709 as shown in Figure 2 of the present disclosure.

At least the following 30 questions are considered (non-exhaustive list in the table below):

| 6x5=30 Qs<br>Right: L2/L1-parameters Below: L0-parameters | **A.) [ODU/OT M] Data Rate/ Band Width/ Guard Band (single side)** | **B.) [OTM] Channel SE M1:fixed or variable, M2: uniform or not** | **C.) [OTM] Power Class (value or range)** | **D.) [ODU] Framing (single or compound)** | **E.) [OTM] Delay @ Reference: xxx.km after decoding at 1550 nm** | **F.) [OTU] FEC (individual or compound) Target: 1.e-12 (given OSNR)** |
|---|---|---|---|---|---|---|
| **1) E** | 100G/50GHz/ 50GHz | M1:Fixed (QPSK) 2Bits/s/Hz M2: n.a. | tbd | Single: ODU4. G. 709 | Current value | Individual: standard RS (255,239) ,G. 975, G.709 |
| **2) WLs: with contiguous spectra.** | Nx100G/Nx50GHz/ 50GHz | M1:Variab le 2-4Bits/s/Hz for QPSK, 16QAM, 64QAM. M2: Uniform once configured | tbd | Multiple: nxODUSi Single: Large ODUSi | Value for dispersion only | Compound: A single RS (new) Individual: Each ODUSi uses standard RS |
| **3) WLn: with non-contiguous spectra.** | N x100G / Nx50GHz/ [1, N] x50GHz | M1: Fixed 2-4Bits/s/Hz for QPSK 16QAM 64QAM. M2: non-uniform and adaptive | tbd | Multiple: n1xODUSi + n2xODUSj +.... | Values for dispersion + multipath | Same as above |

(continued)

| 6x5=30 Qs<br>Right: L2/L1-parameters Below: L0-parameters | **A.) [ODU/OT M] Data Rate/ Band Width/ Guard Band (single side)** | **B.) [OTM] Channel SE M1:fixed or variable, M2: uniform or not** | **C.) [OTM] Power Class (value or range)** | **D.) [ODU] Framing (single or compound)** | **E.) [OTM] Delay @ Reference: xxx.km after decoding at 1550 nm** | **F.) [OTU] FEC (individual or compound) Target: 1.e-12 (given OSNR)** |
|---|---|---|---|---|---|---|
| **4) WH: contiguous, but different sizes others than E** | Nx100G/ < N*50GHz/ 25GHz | M1: Variable 4-12 Bits/s/Hz for QPSK 16QAM 64QAM. M2: unifor m adaptive | e.g. 2dBm/ch for 1T/ 325G Hz | Single: ODUS(H) | Value for dispersion (DSP) | Compound: Single RS code(new) |
| **5) WH+: WH+E +WLc/n** | (N+1)x100 G/ < (N+1)x50 GHz/ 50GH z+ 25GHz | 1)+4) | 1)+4) | Compound: ODUS(H) + ODUS(L) | Value for dispersion + multipath | Individual for each carrier component, be it E or WHS |

**Explanation to the table**

**Rows:**

Acronyms: E=Elementary Channel, WL=Wide Band Low Spectrum Efficiency, WH=Wide Band High Spectrum Efficiency (supper channel), c=contiguous, n=non-contiguous

1. E(w, r, m, g): nominal single optical carrier, where m is the modulation scheme, w is the bandwidth, r the data rate, g the guard band necessary to the neighbors (reflects the filter requirement). It seems reasonable to assume w=50GHz to start with.
2. WLc(c, nxE)={E1,E2,...En}: compound carrier consisting of n nominal single carriers located in contiguous spectra. The parameters required to describe this carrier should be the same as case 1. But the difference may be in the performance (dispersion induced delay) and backwards compatibility, in addition to the increased guard bands. Hence it deserves special additional treatment. In some implementation (e.g., Nyquist WDM) it is possible to allow non-uniform modulation across the elementary carriers, hence possibly different add-drop capabilities for special purposes.
3. WLn(n, nxE)={E1,B, E2,...En}: compound carrier consisting of n nominal carriers with discrete (non-contiguous) spectra, where B means unused spectrum by this carrier. The additional remarks made for case 2 all apply here, too. This case may stretch beyond the feasibility of current technology. However, by properly limiting the parameters, it should be workable under the given technology constraint, we need to understand the quantitative deficit.
4. WH(w,r,m)=[nxE]: supper carrier consisting of inseparable optical sub-carriers, occupying a bandwidth normally much less than nx50GHz, where w is the bandwidth and r the data rate.
5. This is an isolated case when a WH and an E are separated by more than the necessary guard bands.
6. This is the most general case when WH and WLc/n are separated by a distance more than the guard band, where WLn contains WLc as the special case and WLc contains E as the special case.

**Note:**

- Let R refers to the data rate of a carrier, R(E)=r for E(m, w, r, g), and F refers to the spectrum occupied by the carrier, F(E)=w. Then we have:

$$R(WL)=R(WH) \text{ but } F(WL)>F(WH), \text{ hence } SE=R/F \text{ is in favor of WH.}$$

- Difference between WH and WLc/n is that W consists of inseparable optical sub-carriers while WLn/c consists of separable independent (sub)-carriers. The latter has more flexibility and backwards compatibility, while the former has more spectrum efficiency.

**Columns:**

- A.) Data rate refers the payload (ODU) enabled by the carriers. For consistent counting, the following assumption has to be made: Bandwidth refers to the total occupied frequency. The data rate given here is fixed at a 100G increment, although it is possible to increase by repeated factor of 2 based on the increased modulation order from QPSK to 64QAM. Knowing that the performance of higher modulation order is reciprocal to the transmission distance, we consider it convenient for the operation to fix the data rate and make the modulation order adaptive to the transmission distance. This way, the network planning can be made based on fixed increments of the frequency and targeted transmission distance, where the modulation order becomes embedded into the latter.
- B.) M1: Non-uniform modulation scheme include uniform modulation scheme as the special case. M2: Variable modulation scheme include fixed modulation scheme as the special case
- C.) Power class/limits and possible power saving schemes or requirements. Since the modulation order and the coherent detection technology itself may be power dependent, due to the physical interaction of the fiber crystal with the photons, the designated transmission power may be an important issue of the performance. In particular, the range of the power need be specified for the benefit of network planning so that a trade-off between power consumption and the performance can be made.
- D.) Framing indicates whether the ODU(S) w/o a substructure. A sub-structure can be ODUSi. Moreover, other sub-structure can be considered, for instance to allow for adaptive FEC, to be discussed in below.
- E.) pss/nm/km may still be applied, but in view of the ultra-long distance application, for which the 100G and beyond are targeted, a rather longer reference distance may be preferred.
- F.) Individual FEC indicates that OTUS' are independent of each other. Compound FEC refers to the possibility that ODUSi can be bundled and protected by a single FEC (e.g. Reed-Solomon Code to be defined yet). The need for the latter brought in by possible transmission distance dependent protection scheme possible with the coherent detection technology. It has the potential benefit of time saving and energy saving when the FEC can be made adaptive to the transmission distance. This requires ODUSi be passed to the OTM transparently and combined at the receiver, then applying a single FEC together with coherent detection. This requires a new procedure of constructing Och at the receiver and, as such, may require change/addition in the OTN architecture.
- G.) What was not put into the table is the possible addition to the non-associated channels and the signaling in terms of network management within the framework of G.709. The considerations to this will depend on how the other factors are addressed.
- H.) As an addition to receiver, with potential impact on the performance, the coherent detection and posterior DSP have to be specified to some extent to allow alignment of different implementation of the same tributary. Information of this respect may help to set the performance target for physical tolerance of the fiber impairments (PMD, CD, SPM, Non-linearity etc.)

**Illustrations:** Location of carriers on the optical spectrum

4. Media Aware Data Frames for OTN

There are basically two parameters that will play the enabling role in the elastic network:

1. The Spectrum Efficiency (SE)

Here the transmission data rate R=W*S, where W is the bandwidth (Hz) and S is the spectrum efficiency (bit/s/Hz)

2. SE-Distance Trade-off

Here the product of data rate and the transmission distance A=R*D. Noting that the transmission distance is monotone function of the SNR, we can alternatively define A=R*SNR, where the SNR(dB)=OSNR(dB)+G (dB) with G including the coding gain, overhead loss and electrical gain.

**Example 1:** SE of a single carrier (including multi-sub-carrier implementation) has a typical distance dependence, for instance as given in the following:

| | | | | |
|---|---|---|---|---|
| GHz | 50 | 200 | 400 | 600 |
| b/Hz/s | 2 | 4 | 8 | 16 |
| >km | 3000 | 2000 | 1000 | 500 |

Using 8*50=400GHz bandwidth can reach a distance beyond 2000km with 8*50*2=800Gb/s data transport, which relies on simultaneous multiple channels (via N-WDM) and SE=2. But the same capacity can be provided by a single 200GHz channel with SE=4, i.e. 4*200=800Gb/s. The latter is certainly preferred if the spectrum efficiency is the major concern. The former solution may be attractive if the flexible utilization of available spectrum is needed (8 separated bandwidths).

This is an example on how the information of SE can be used to construct proper channels of desired data rate, depending on the availability of (contiguous or discrete) spectrum and the targeted transmission distance.

To incorporate the two important constraints into the OTN to enable EON operation, the following new header to ODU and the corresponding mapping to the media layer is necessary.

1. For each ODU of fixed data payload size. The associated information includes various SE, corresponding different PHY implementation, hence different requirement on bandwidth. To standardize it means to lay down the range and granularity. Since an ODU is defined as response to a fixed data rate, each data rate can be constructed by several SEs. Let the allowed SE be: SEi for i=1, 2, 3, 4, corresponding to 2bit/symbol, 4bits/symbol, 8bits/symbol, 16bits/symbol. Then, for given R there are i=1, 2, 3, 4 different bandwidth requirements, i.e. Wi=i*W1, for i=1, 2, 3, 4. The network element should possess the capability of adding and dropping those carriers of different sizes, to enhance the transmission capability of the ODU frames, that a client can select. For this purpose the ODU overhead in the OUT will need an additional 2 bits of information. Each of these 4 states indicated by the 2 bits is mapped to a specific resource allocation (n, m) by the media layer. We note that (n,m) indicates that the SEi value is in fact reflected by the spectrum allocation, depending on the carrier types: Elementary, WLS, WHS and WHS+. This implies that SEi(W) is a function of the bandwidth and the same SE can be realized by different carrier allocations, depending on the bandwidth. Thus, there is to be a lookup table to allow for the proper SEi value for different constellation of the spectrum carrier allocation.

2. The desired transmission distance of a client should be available to the switch at each node, or at least to the client at the trail origin. A lookup table will provide the mapping of the transmission distance to the different available coding gain G, regardless the FEC codec deployed, which is left for the implementation. Depending on the required coding gain, the FEC indicator (4 bits) can be attached to the OTU header. The indicator FECj informs the client/switch: no FEC, low FEC, medium FEC and high FEC, for j=1, 2, 3, 4, to allow for the transmission of the same ODU with the given SEi to transmit to long distance, medium distance, short distance, respectively. Thus, the operator and the clients can select which state to use to initiate the transmission.

In total, for each ODU, we have the information (SEi, FECj) for i, j=1, 2, 3, 4. This information should be checked at each 3R (re-amplification, re-shaping, re-timing) node to allow for optimized resource allocation by finding the proper resource from the resource pool or resource re-allocation by modifying the parameters to allow for effective usage of the available resource.

**Example 2:** An ODU should know its own spectrum efficiency and its trail distance. To facilitate such a paradigm, a lookup table for each ODU should be introduced as the following:

| Index i | SE(i) (type) | FEC(i) (flavor) | Carrier |
|---|---|---|---|
| 1 | 2 | no | E, WLSn |
| 2 | 4 | low | WLSc, WHS |
| 3 | 8 | medium | WHS, E |
| 4 | 16 | high | WHS, E |

This information can be stored at the switch or at the control and management system, as it depends on system implementation and local spectrum utilization. The information is also exchanged at the ONNI, noting that the distance is not necessarily a span distance and it can include multiple spans in a translucent network.
frequency

**Example 3**: By protection switching, the new path is normally of different topology and requires new assignment of resource on the optical spectrum to maintain the same spectrum efficiency. Therefore, there is a need for the PCE to determine the types and flavors of the same ODU in the new path. In general, each path has a different map for the same ODU. Only by this means the overall spectrum utilization can be optimized. The need of types SE(i) and flavors FEC(j) for this purpose is obvious.

5. Performance

Assume add-drop capability at each node. Performance can be set as probability of assignment success. Equal probability for all clients can be achieved by different resource allocations because of different requirements on volume and distance, necessitating different SE requirements. In fact it turns out to be a trade-off between line cost and equipment cost.

By linearization, the SE can be made local linear function of the bandwidth. Then the same SE will correspond to different bandwidths due to the dependence of different slopes defined by the targeted transmission distance, as shown below:

Capacity provided can be computed by C=B*SE, where B is the spectrum bandwidth and SE(B) is the spectrum efficiency and depends on the bandwidth due to hardware implementation. Assume local linearization we could have SE(B)=a*B for a fixed number a. Then we obtain $C=B^2*a$, thus the capacity becomes square function of the bandwidth scaled by a constant a (for the given spectrum linearization range)

6. Mapping of ODU(s, i, j) to OTM (n, m)

At first have a look at the current definition of the OTM n. m as given by G.709. The introduction of the mapping from ODU (s, i, j) to OTM (n, m) can follow the same line or require innovations to take account of the special circumstance of the coherent detection. 1

The OTM-n.m interface supports up to n optical channels for single or multiple optical spans. 3R regeneration is not required at the interface.

Several OTM-n interface signals are defined. Some examples:

- OTM-n.1 (carrying i (i ≤ n) OTU1[V] signals):
- OTM-n.2 (carrying j (j ≤ n) OTU2[V] signals);
- OTM-n.3 (carrying k (k ≤ n) OTU3[V] signals);
- OTN4-n.4 (carrying 1 (1 ≤ n) OTU4[V] signals);
- OTM-n.1234 (carrying i (i ≤ n) OTU1[V], j (j ≤ n) OTU2[V], k (k ≤ n) OTU3[V] and 1 (1 ≤ n) OTU4[V] signals with i + j + k +1 ≤ n);
- OTM-n.123 (carrying i (i ≤ n) OTU1[V], j (j ≤ n) OTU2[V] and k (k ≤ n) OTU3[V] signals with i + j + k ≤ n);
- OTM-n.12 (carrying i (i ≤ n) OTU1[V] and j (j ≤ n) OTU2[V] signals with i + j ≤ n);
- OTM-n.23 (carrying j (j ≤ n) OTU2[V] and k (k ≤ n) OTU3[V] signals with j + k ≤ n);
- OTM-n.34 (carrying k (k ≤ n) OTU3[V] and 1 (1 ≤ n) OTU4[V] signals with k + 1 ≤ n), in generic terms identified as OTM-n.m.

An OTM-n.m interface signal contains up to "n" OCCs associated with the lowest bit rate that is supported as indicated by m and an OSC (see Figure 8-4). It is possible that a reduced number of higher bit rate capable OCCs are supported. The value of "n", "m" and the OSC are not defined in this Recommendation.

1. Generation: Add traffic in ingress

At least the direct link should be considered regarding the required SE and distance. For translucent network, the OSNR of the total path should also be known to make proper decision.

2. Switching: Divert traffic at node w/o Color Conversion

The ROADM may be CDC (colorless, directionless, collisionless). Otherwise the capability of the new ODU is very limited.

3. Intermediate: Forward traffic through upper layer frame Format conversion (3R)

3R should be the termination point for the optical path, where new channels with different SE and distance can be selected to transport the same amount of data and channel capacity.

4. Consumption: Drop traffic at egress.

This is also ROADM or OADM or 3R points.

Although the invention has been described and illustrated in exemplary forms with a certain degree of particularity, it is noted that the description and illustrations have been made by way of example only. Specific terms are used in this application in a generic and descriptive sense only and not for purposes of limitation. Numerous changes in the details of construction and combination and arrangement of parts and steps may be made. Accordingly, such changes arc intended to be included in the invention, the scope of which is defined by the claims.

7. References

[1]ITU-T, G.964.1, "Spectral Grids for WDM Applications : DWDM Frequency", 2012
[2] ITU-T, G.709, "Interface for Optical Transport Network", www.itu.int, 2009
[3] ITU-T, G.872, "Architecture of Optical Transport Network ", 2011
[4] ITU-T, G.sup39, "Optical System Design and Engineering Considerations", 2006
[5] D. Huo, "Field Trial on Beyond 100G in Europe ", WDM Forum, 2012.
[6] X. Cai et al," Experimental Demonstration of Adaptive Combinational QoT Failure Resotraiton in Flexible Bandwidth Networks" , PDPSD.1 OFC2012
[7] J. Yu, et al, "Field Trial Nyquist-WDM Transmission of 8x216.4Gb/s PDM-CSRZ-QPSK Exceeding 4b/s/Hz SE" PDPSD.3, OFC2012.
[10] O. Gerstel, et al,"Elastic Optical Networking: A New Dawn for the Optical Layer?", IEEE Communications Magazine, Feb.2012.
[11] M. Jinno et al, "Demonstration of Translucent Elastic Optical Network Based on Virtualized Elastic Regenerator", PDP5B.6, OFC, 2012
[12]X. Fu et al, "Architecture Consideration for the extension of OTN beyond 100G", SG15, Sept, 2012
[13]X. Fu, et al," Inverse multiplexing for ODUS", SG15, Sept, 2012

## Claims

**1.** A method of enabling elastic optical network operation comprising:

standardizing, by laying down a spectral range and granularity, a plurality of optical data units, ODU, of fixed data payload size and different data rates, wherein each of the plurality of ODU are associated with a spectral efficiency and physical layer, PHY, implementation;
wherein the data rates corresponding to the plurality of ODU are constructed by a plurality of spectral efficiencies.

**2.** The method of claim 1, wherein the plurality of spectral efficiencies is four, and correspond to 2bit/symbol, 4bit/symbol, 8bit/symbol, and 16bit/symbol and wherein ODU overhead requires an additional 2 bits of information to indicate mapping to a specific resource allocation.

**3.** The method of claim 1, further comprising using a lookup table for spectral efficiency values for different constellations of spectrum carrier allocation.

**4.** The method of claim 1, further comprising using a lookup table to provide mapping of transmission distance to available coding gain.

**5.** The method of claim 4, wherein an FEC indicator is attached to an OTU header.

**6.** The method of claim 1, further comprising optimized resource allocation by:

associating, with each of the plurality of ODU, (SEi, FECj) for i,j = 1, 2, 3, 4;
checking the associated (SEi, FECj) at each re-amplification node, re-shaping node, and re-timing node;
finding a proper resource from a pool or re-allocating a resource by modifying parameters to allow for effective usage of available resources.

**7.** The method of claim 6, further comprising using a lookup table for each ODU to know its own spectral efficiency and trail distance.

**8.** The method of claim 7, wherein the lookup table is stored at a switch or control and management system.

**9.** The method of claim 1, further comprising resource assignment to maintain spectral efficiency by:
determining, by a PCE, types and flavors of one of the plurality of ODU in one of a plurality of paths, wherein the paths have a different map for the ODU.

**10.** The method of claim 9, wherein a plurality of nodes have add-drop capability and performance is set as a probability of assignment success.

## Patentansprüche

**1.** Verfahren zum Aktivieren eines elastischen optischen Netzwerkbetriebs, umfassend:

Standardisieren, durch Festlegen eines Spektralbereichs und einer Granularität, einer Vielzahl von optischen Dateneinheiten (optical data units, ODU) mit fester Nutzdatengröße und unterschiedlichen Datenraten, wobei jede der Vielzahl von ODU mit einer Implementierung einer Bandbreiteneffizienz und physikalischen Schicht (PHY) assoziiert ist;
wobei die Datenraten, die der Vielzahl von ODU entsprechen, durch eine Vielzahl von Bandbreiteneffizienzen konstruiert sind.

**2.** Verfahren nach Anspruch 1, worin die Vielzahl von Bandbreiteneffizienzen vier ist und 2Bit/Symbol, 4Bit/Symbol, 8Bit/Symbol und 16Bit/Symbol entspricht und worin ODU-Overhead zusätzliche 2 Bit Informationen benötigt, um ein Mapping zu einer spezifischen Ressourcenzuweisung anzugeben.

**3.** Verfahren nach Anspruch 1, ferner umfassend eine Verwendung einer Lookup-Tabelle für Bandbreiteneffizienzwerte für verschiedene Konstellationen von Bandbreitenträgerzuweisung.

**4.** Verfahren nach Anspruch 1, ferner umfassend eine Verwendung einer Lookup-Tabelle, um ein Mapping von Übertragungsstrecke zu einer verfügbaren Codierungsverstärkung bereitzustellen.

**5.** Verfahren nach Anspruch 4, wobei ein FEC-Indikator an einem OTU-Header angebracht ist.

**6.** Verfahren nach Anspruch 1, ferner umfassend eine optimierte Ressourcenbelegung durch:

Assoziieren von (SEi, FECj) für i,j = 1, 2, 3, 4 mit jeder der Vielzahl von ODU;
Überprüfen der assoziierten (SEi, FECj) an jedem Reamplification-Knoten, Reshaping-Knoten und Retiming-Knoten;
Finden einer geeigneten Ressource aus einem Pool oder erneute Zuweisung einer Ressource durch Ändern von Parametern, um eine effektive Nutzung der verfügbaren Ressourcen zu ermöglichen.

**7.** Verfahren nach Anspruch 6, ferner umfassend eine Verwendung einer Lookup-Tabelle für jede ODU, um ihre eigene Bandbreiteneffizienz und Trail-Strecke zu kennen.

**8.** Verfahren nach Anspruch 7, wobei die Lookup-Tabelle in einem Schalter- oder Steuerungs- und Managementsystem gespeichert ist.

**9.** Verfahren nach Anspruch 1, ferner umfassend eine Ressourcenzuweisung zum Aufrechterhalten einer Bandbreiteneffizienz durch:
Bestimmen von Typen und Varianten von einer der Vielzahl von ODU in einem von einer Vielzahl von Pfaden durch ein PCE, wobei die Pfade ein verschiedenes Map für die ODU aufweisen.

**10.** Verfahren nach Anspruch 9, wobei eine Vielzahl von Knoten Add-Drop-Fähigkeiten aufweisen und die Leistung als Wahrscheinlichkeit von Zuordnungserfolg festgelegt ist.

## Revendications

**1.** Procédé consistant à permettre un fonctionnement de réseaux optiques élastiques comprenant :

la normalisation, par l'établissement d'une gamme spectrale et d'une granularité, d'une pluralité d'unités de données optiques (ODU), d'une taille de la charge utile de données fixes et de différents débits de données, chacune de la pluralité d'ODU étant associée à la mise en place d'une efficacité spectrale et couche physique (PHY) ;
les débits de données correspondant à la pluralité d'ODU étant construits par une pluralité d'efficacités spectrales.

**2.** Procédé selon la revendication 1, dans lequel la pluralité d'efficacités spectrales représente quatre, et correspond à 2 bits/symbole, 4 bits/symbole, 8 bits/symbole et 16 bits/symbole et la surcharge d'ODU nécessitant 2 bits supplémentaires d'informations pour indiquer le mappage à une attribution de ressource spécifique.

**3.** Procédé selon la revendication 1, comprenant en outre l'utilisation d'une table de consultation pour des valeurs d'efficacité spectrale pour différentes constellations d'une attribution porteuse de spectre.

**4.** Procédé selon la revendication 1, comprenant en outre l'utilisation d'une table de consultation pour fournir le mappage d'une distance de transmission à un gain de codage disponible.

**5.** Procédé selon la revendication 4, dans lequel un indicateur de correction préventive des erreurs (« Forward Error Correction » - FEC) est attaché à une en-tête OTU.

**6.** Procédé selon la revendication 1, comprenant en outre une attribution de ressource optimisée par :

l'association, à chacune de la pluralité d'ODU, de (SEi, FECj) pour i,j = 1, 2, 3, 4 ;
la vérification de (SEi, FECj) associé à chaque noeud de ré-amplification, noeud de remodelage et noeud de reprogrammation ;
le fait de trouver une ressource appropriée à partir d'un groupe ou la ré-attribution d'une ressource par la modification de paramètres pour permettre une utilisation efficace de ressources disponibles.

**7.** Procédé selon la revendication 6, comprenant en outre l'utilisation d'une table de consultation pour chaque ODU pour connaître sa propre efficacité spectrale et distance de chemin.

**8.** Procédé selon la revendication 7, dans lequel la table de consultation est stockée au niveau d'un système de commutation ou commande et de gestion.

**9.** Procédé selon la revendication 1, comprenant en outre une affectation de ressource pour maintenir une efficacité spectrale par :
la détermination, par un élément de calcul de chemin (« Path computation element » - PCE), de tous les types d'une de la pluralité d'ODU dans un de la pluralité de chemins, les chemins présentant une carte différente pour l'ODU.

**10.** Procédé selon la revendication 9, dans lequel une pluralité de noeuds présentent une capacité d'insertion-extraction et le rendement est défini comme probabilité de succès d'affectation.

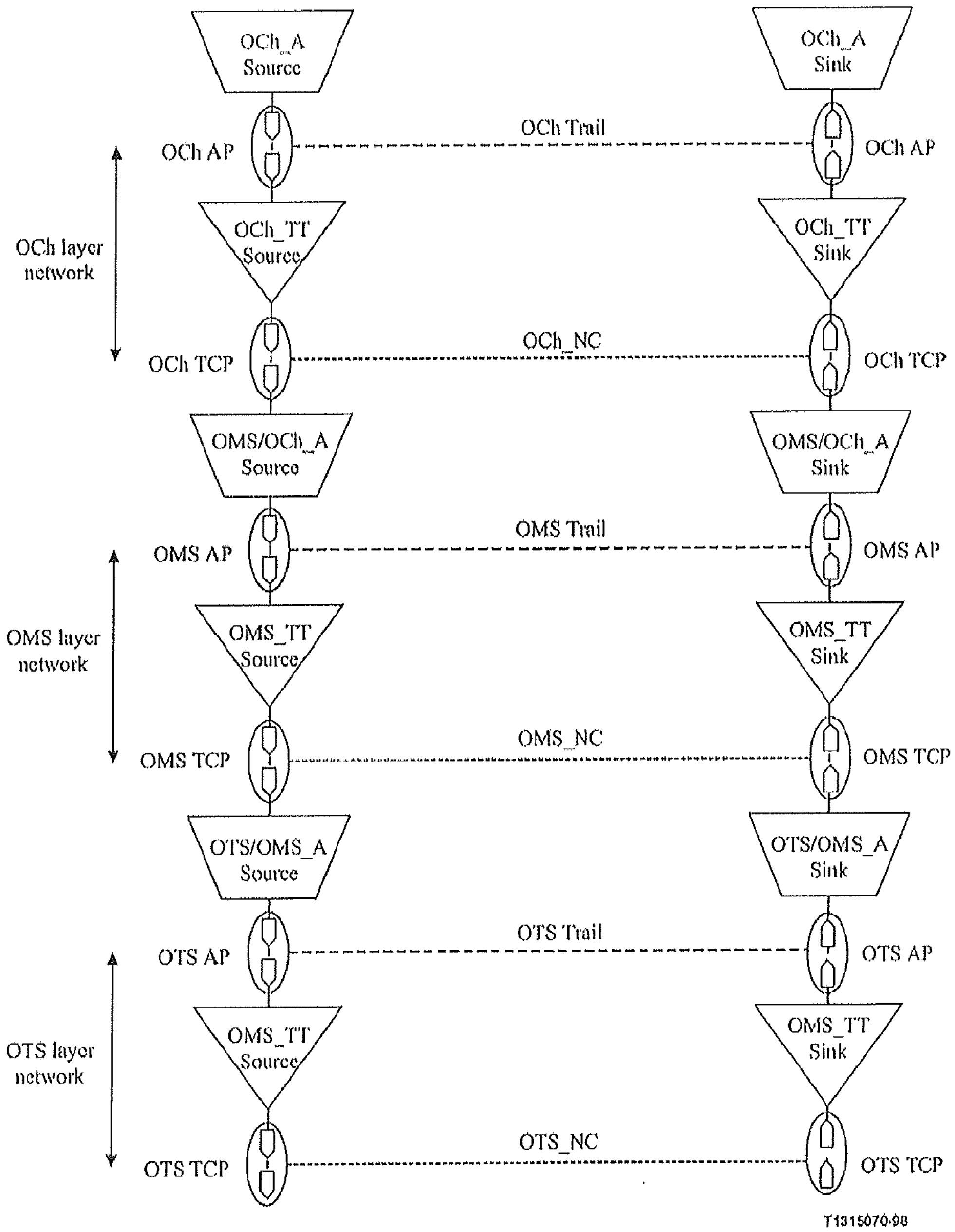
OCh_A
Source
OCh_A
Sink
OCh AP
OCh Trail
OCh AP
OCh layer
network
OCh_TT
Source
OCh_TT
Sink
OCh TCP
OCh_NC
OCh TCP
OMS/OCh_A
Source
OMS/OCh_A
Sink
OMS AP
OMS Trail
OMS AP
OMS layer
network
OMS_TT
Source
OMS_TT
Sink
OMS TCP
OMS_NC
OMS TCP
OTS/OMS_A
Source
OTS/OMS_A
Sink
OTS AP
OTS Trail
OTS AP
OTS layer
network
OMS_TT
Source
OMS_TT
Sink
OTS TCP
OTS_NC
OTS TCP
T1315070-98

Figure 1

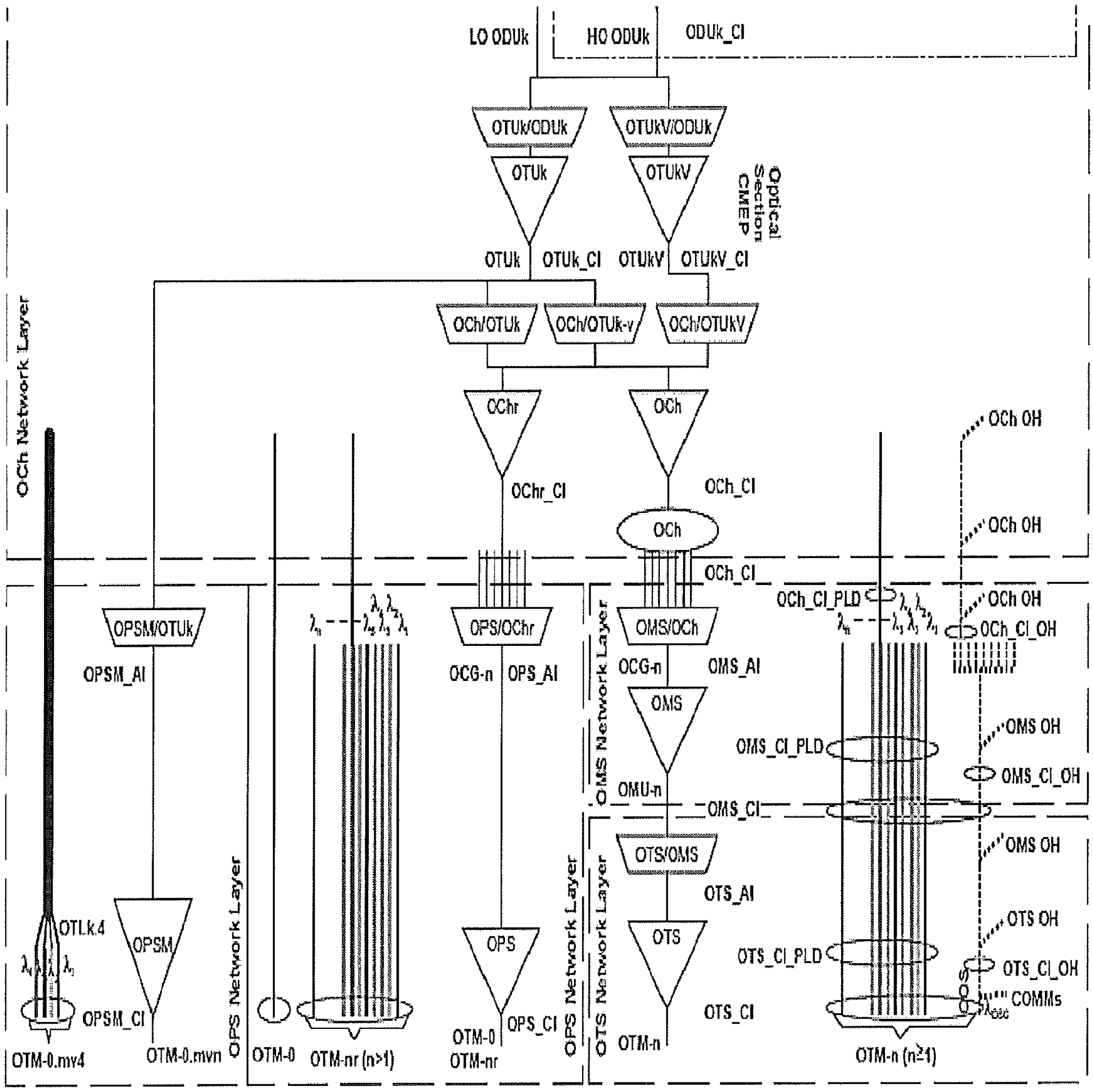
LO ODUk
HO ODUk
ODUk_CI
OTUk/ODUk
OTUkV/ODUk
OTUk
OTUkV
Optical Section CMEP
OTUk
OTUk_CI
OTUkV
OTUkV_CI
OCh/OTUk
OCh/OTUk-v
OCh/OTUkV
OCh Network Layer
OChr
OCh
OChr_CI
OCh_CI
OCh
OCh OH
OCh_CI
OCh_CI_PLD
OCh_CI_OH
OPSM/OTUk
OPSM_AI
OPS/OChr
OCG-n
OPS_AI
OMS/OCh
OCG-n
OMS_AI
OMS
OMS Network Layer
OMS_CI_PLD
OMS OH
OMS_CI_OH
OMU-n
OMS_CI
OTS/OMS
OTS_AI
OTS
OTS_CI_PLD
OTS OH
OTS_CI_OH
COMMs
OTS_CI
OTLk.4
OPSM
OPSM_CI
OPS
OPS_CI
OPS Network Layer
OTS Network Layer
OTM-0.mv4
OTM-0.mvn
OTM-0
OTM-nr (n>1)
OTM-0
OTM-nr
OTM-n
OTM-n (n≥1)

Figure 2

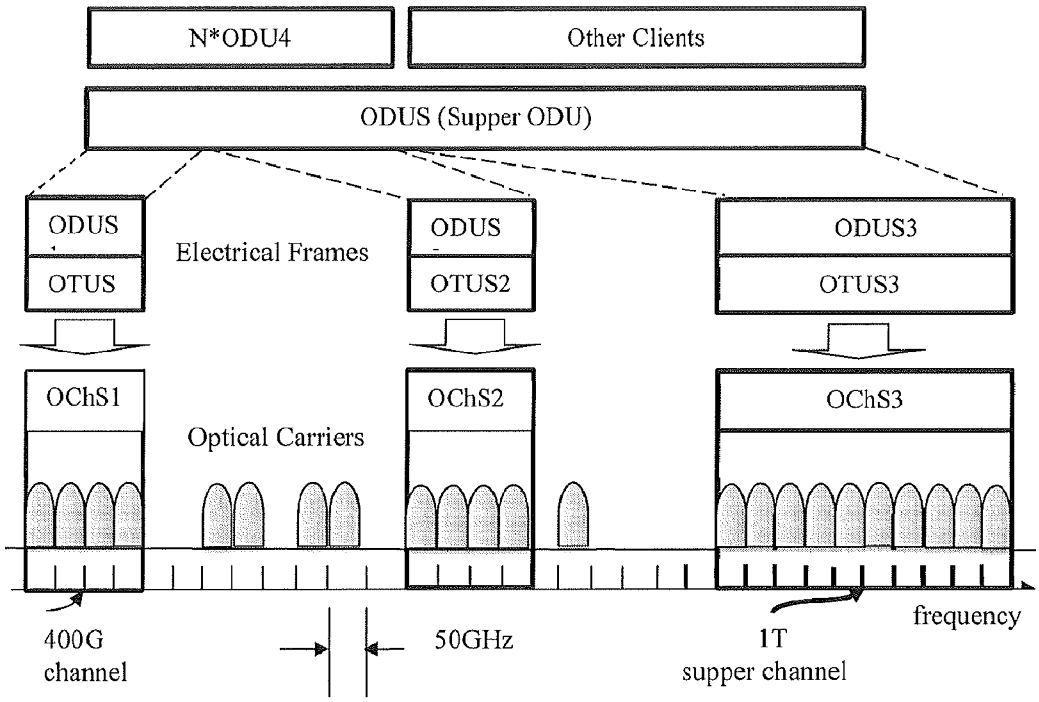


Figure 3

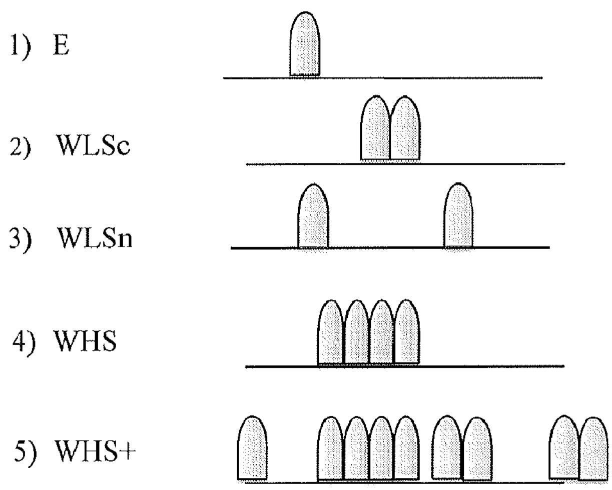


Figure 4

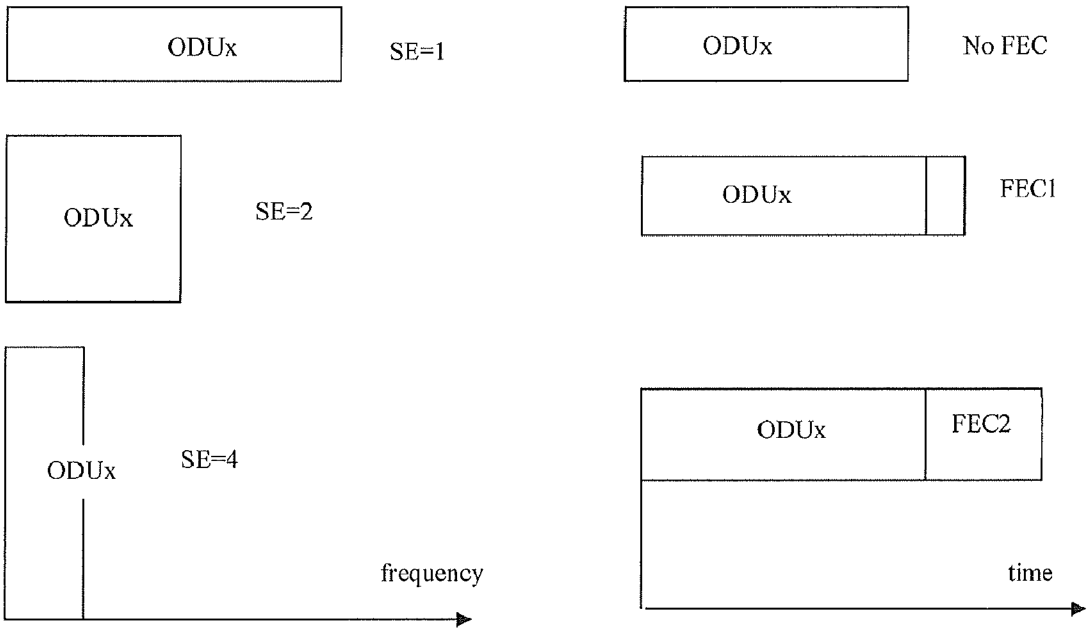
ODUx
SE=1
ODUx
SE=2
ODUx
SE=4
frequency
ODUx
No FEC
ODUx
FEC1
ODUx
FEC2
time

Figure 5

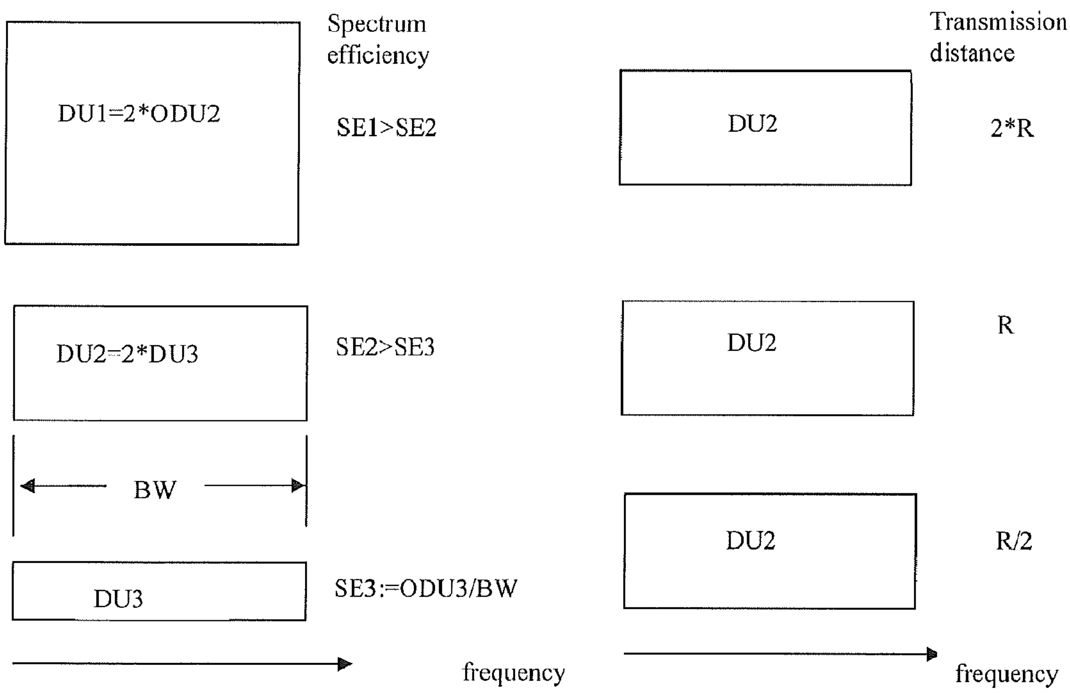


Figure 6

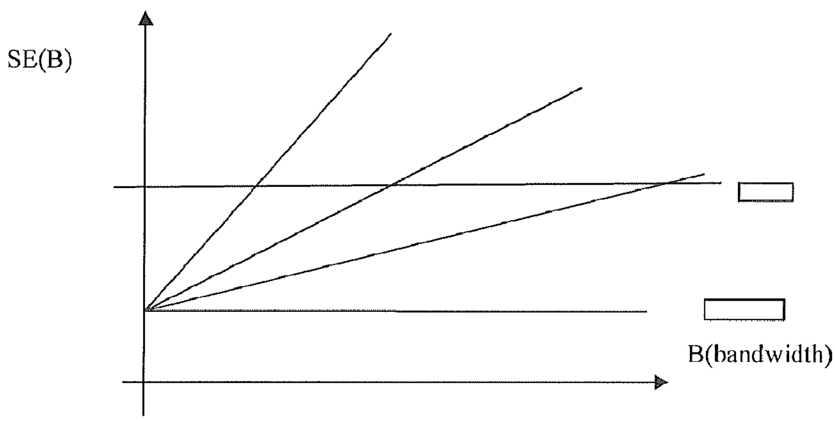


Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **MASAHIKO JINNO et al.** Elastic and Adaptive Optical Networks: Possible Adoption Scenarios and Future Standardization Aspects. *IEEE Communications Magazine,* October 2011, 164-172
- **B. KOZICKI et al.** Efficient elastic optical path network for transmission beyond 100G. *OPTICAL METRO NETWORKS AND SHORT-HAUL SYSTEMS III,* 22 January 2011, vol. 7959 (1), 1-9
- Spectrum-efficient and scalable elastic optical path network: architecture, benefits, and enabling technologies. **M. JINNO et al.** IEEE COMMUNICATIONS MAGAZINE. IEEE SERVICE CENTER, 01 November 2009, vol. 47, 66-73
- Standardization issues and solutions toward flexible/elastic optical networks. **TAKUYA OHARA.** OPTO-ELECTRONICS AND COMMUNICATIONS CONFERENCE (OECC). IEEE, 02 July 2012, 115-116
- Spectral Grids for WDM Applications : DWDM Frequency. *ITU-T, G.964.1,* 2012
- Interface for Optical Transport Network. *ITU-T, G.709,* 2009, www.itu.int
- Architecture of Optical Transport Network. *ITU-T, G.872,* 2011
- Optical System Design and Engineering Considerations. *ITU-T, G.sup39,* 2006
- **D. HUO.** Field Trial on Beyond 100G in Europe. *WDM Forum,* 2012
- **X. CAI et al.** Experimental Demonstration of Adaptive Combinational QoT Failure Resotraiton in Flexible Bandwidth Networks. *PDPSD.1 OFC2012*
- **J. YU et al.** Field Trial Nyquist-WDM Transmission of 8x216.4Gb/s PDM-CSRZ-QPSK Exceeding 4b/s/Hz SE. *PDPSD.3, OFC2012*
- **O. GERSTEL et al.** Elastic Optical Networking: A New Dawn for the Optical Layer?. *IEEE Communications Magazine,* February 2012
- **M. JINNO et al.** Demonstration of Translucent Elastic Optical Network Based on Virtualized Elastic Regenerator. *PDP5B.6, OFC,* 2012
- **X. FU et al.** Architecture Consideration for the extension of OTN beyond 100G. *SG15,* September 2012
- **X. FU et al.** Inverse multiplexing for ODUS. *SG15,* September 2012